# EUROPÄISCHE PATENTSCHRIFT

(11) **EP 2 333 477 B1**
(45) Veröffentlichungstag und Bekanntmachung des Hinweises auf die Patenterteilung: **22.08.2012**
(21) Anmeldenummer: 10193207.7
(22) Anmeldetag: 30.11.2010
(51) Int. Cl.: F01N 5/02, F01N 3/023, F28G 7/00, F28G 9/00, F28F 19/01, F28D 7/16, F02G 5/04

(54) **Blockheizkraftwerk mit Wärmetauscher-Reinigungsvorrichtung und ein Verfahren zur Verwendung eines solchen Blockheizkraftwerkes**
Cogeneration plant with cleaning arrangement for its heat exchanger and method for using same
Centrale de cogénération avec un dispositif de nettoyage de son échangeur de chaleur et un procédé d'utilisation correspondant

(30) Priorität: 02.12.2009 DE 102009047392
(43) Veröffentlichungstag der Anmeldung: 15.06.2011
(73) Patentinhaber: Schneider, Georg, 97080 Würzburg (DE)
(72) Erfinder: Schneider, Georg, 97080 Würzburg (DE); Gross, Reinhard, 97337 Dettelbach (DE)
(74) Vertreter: Stiel, Jürgen

(56) Entgegenhaltungen:
- EP-A1- 1 336 729
- EP-A1- 1 798 511
- DE-A1- 2 927 671
- DE-A1- 3 810 137
- DE-A1- 10 248 292
- DE-A1-102006 061 591
- DE-C1- 3 325 200
- US-A- 5 154 197

## Beschreibung

Die Erfindung betrifft ein Blockheizkraftwerk und ein Verfahren zur Verwendung eines Blockheizkraftwerkes gemäß dem Oberbegriff des Anspruches 1 oder 12.

Durch die EP 1798511 A1 ist ein Abgaswärmetauscher eines Verbrennungsmotors bekannt, wobei ein Ultraschall-Schwingungsgeber im Bereich eines Austritts eines Gasstroms an einer Stirnseite des Abgaswärmetauschers angeordnet sein kann. Im Abgaswärmetauscher ist ein von einem Kühlmittel umströmtes Bündel von Rohren angeordnet.

Die DE 2927671 A1 zeigt eine Einrichtung zum Verhindern von Ablagerungen in einem Wärmetauscher, wobei im oder am Wärmetauscher eine Ultraschallquelle angeordnet ist.

Die DE 10248292 A1 offenbart ein Blockheizkraftwerk mit einem Abgaswärmetauscher entsprechend dem Oberbegriff des Anspruchs 1.

Die DE 102006006080 A1 beschreibt eine Reinigungsvorrichtung für einen gattungsfremden Wärmetauscher eines Haushaltswäschetrockners mit einem Kanalbereich eines Prozessluftkreislaufes. Zur Reinigung des Wärmetauschers ist dieser Kanalbereich mit einer Reinigungsflüssigkeit zu fluten, die nach der Reinigung wieder ablassbar ist. Die Reinigungsflüssigkeit wird mittels eines Ultraschallerregers in Bewegung versetzt.

Die DE 8319866 U1 zeigt einen Röhrenwärmetauscher mit Schottelementen.

Die DE 3820067 A1 offenbart einen Abgaswärmeübertrager mit Filter.

Der Erfindung liegt die Aufgabe zugrunde, ein Blockheizkraftwerk und ein Verfahren zur Verwendung eines Blockheizkraftwerkes zu schaffen.

Die Aufgabe wird erfindungsgemäß durch die Merkmale des Anspruches 1 oder 12 gelöst.

Die mit der Erfindung erzielbaren Vorteile bestehen insbesondere darin, dass eine einfache, effiziente Reinigung eines Wärmeübertragers eines Blockheizkraftwerkes möglich ist.

Insbesondere Abgaswärmeübertragern von Verbrennungsmotoren sind aufgrund des hohen Anfalls von Schmutzpartikeln häufig zu reinigen oder mit aufwendigen vorgeschalteten Reinigungseinrichtungen auszustatten. Eine Verschmutzung führt zu erhöhten Strömungswiderständen und zu schlechtem Wärmeübergang.

Bei der bevorzugten Ausführung in Blockheizkraftwerken ist ein hoher Wirkungsgrad des Abgaswärmeübertragers wichtig für die Wirtschaftlichkeit des Blockheizkraftwerkes.

Insbesondere bei mindestens einem im Wärmetauscher angeordneten Filterelement und/oder Schottelement, das und/oder die insbesondere einen kompakten Aufbau einer Abgasleitung und/oder eines Abgaswärmeübertragers ermöglichen, wird mit der vorliegenden Erfindung eine effiziente Reinigung ermöglicht.

Durch den Einsatz von Filterelemente haften pro Zeitintervall weniger Schmutzpartikel (z.B. Russpartikel) an Tauscherelementen (z.B. Rohrbündel), so dass ein höherer Wärmeübergang über ein längeres Zeitintervall möglich ist.

Bei einer vorteilhaften Ausführung der Filterelemente als Drahtgewebe wird eine große Oberfläche geschaffen, die eine Ablagerung einer großen Menge von Schmutzpartikeln ermöglicht, so dass an den Tauscherelementen des Wärmeübertragers vergleichsweise geringe Ablagerungen entstehen.

Durch den Einsatz von mindestens einem oder mehreren Schottelementen wird durch einen meanderartigen Verlauf des Abgases durch den Abgaswärmeübertrager ein Wärmeübertrag verbessert und dadurch die Wirtschaftlichkeit insbesondere eines

Blockheizkraftwerkes erhöht.

Besonders bevorzugt ergibt die spezielle Kombination von mindestens einem Schottelement und mindestens einem Filterelement innnerhalb des Wärmeübertragers eines Blockheizkraftwerkes Vorteile bei einem kompakten Aufbau (Größe) bei guten Betriebseigenschaften, wobei diese Betriebseigenschaften durch die einfache und wirkungsvolle Reinigung aufrechterhalten und/oder wiederhergestellt werden.

Insbesondere bei einem mit hohen Temperaturen arbeitenden Abgaswäremübertrager wird mit einer bevorzugten Anordnung einer Erregereinrichtung im Bereich der Zuleitung der Kühlflüssigkeit des Motors eine hohe thermische Belastung der Erregereinrichtung vermieden.

Durch den Einsatz einer Reinigungsflüssigkeit wird eine sichere Entfernung gelöster Schmutzpartikel auch aus dem Abfluss der Reinigungsflüssigkeit entfernt liegenden Bereichen des Wärmeübertragers ermöglicht, insbesondere bei einem Einsatz von zusätzlichen Filterelementen.

Die Anordnung einer Pumpe zur gesteuerten Zufuhr und/oder die Nutzung von Schwerkraft zur Abfuhr von Reinigungsflüssigkeit erlauben einen einfachen Aufbau der Vorrichtung unter sparsamer Verwendung der Reinigungsflüssigkeit.

Durch Verwendung eines Filtermediums für die Reinigungsflüssigkeit ist insbesondere eine Mehrfachnutzung der Reinigungsflüssigkeit möglich.

Dies ist besondere dann vorteilhaft, wenn die verunreinigte Reinigungsflüssigkeit nicht einfach über eine Kanalisation entsorgt werden kann.

Ausführungsbeispiele der Erfindung sind in den Zeichnungen dargestellt und werden im Folgenden näher beschrieben.

Es zeigen:

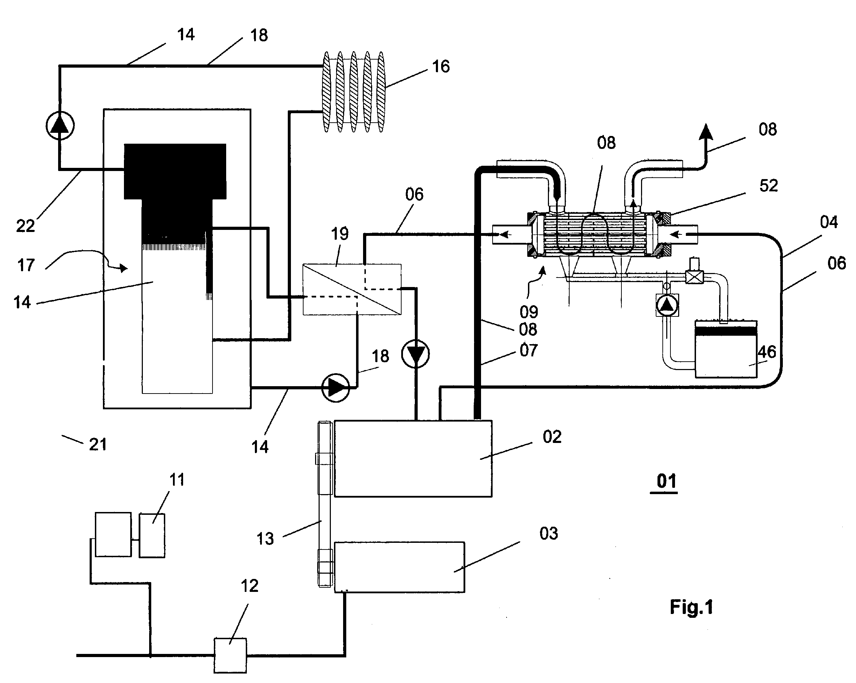

- Fig. 1: Eine schematische Darstellung eines Blockheizkraftwerkes;

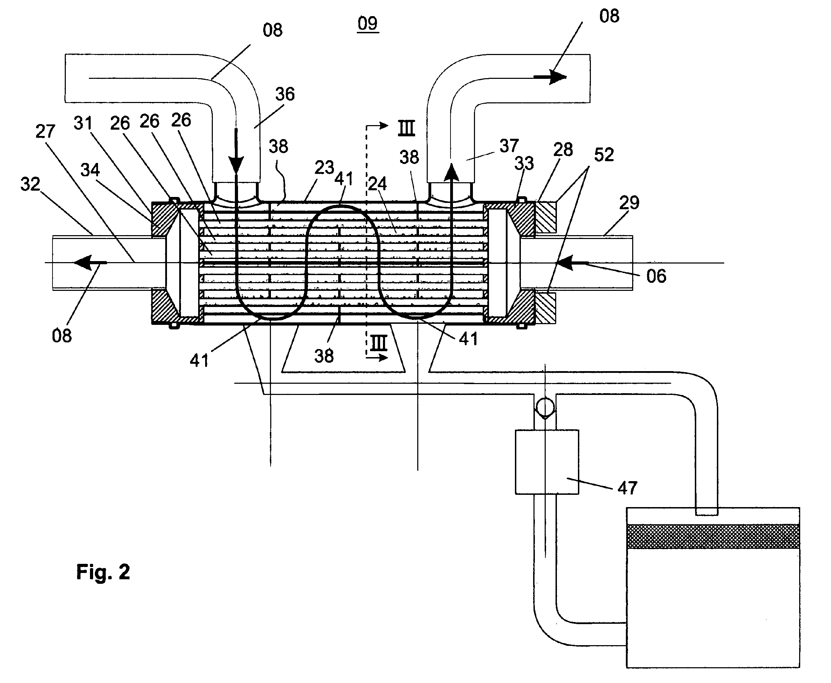

- Fig. 2: eine schematische Darstellung eines Wärmeübertragers in einem Betriebszustand;

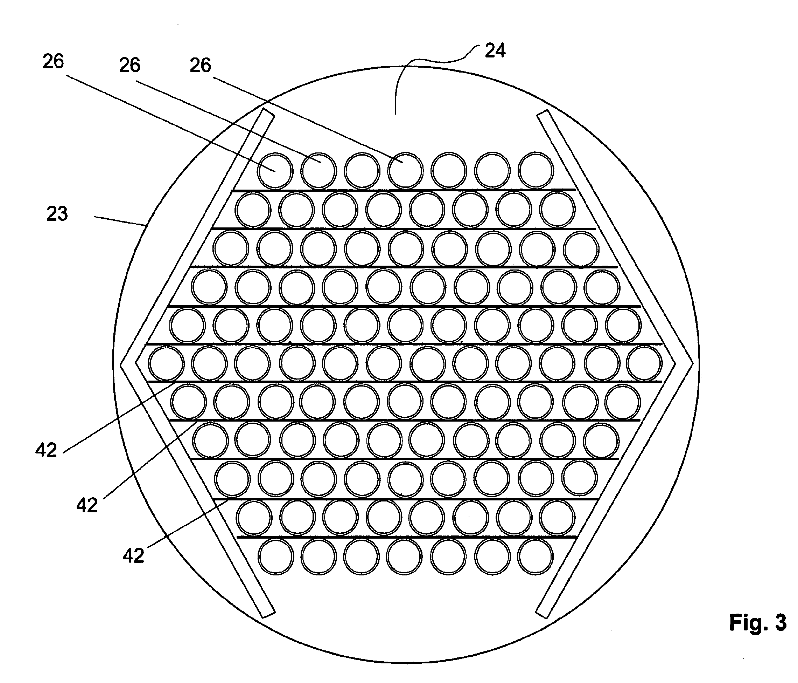

- Fig. 3: eine schematische Darstellung eines Querschnittes durch den Wärmetauscher;

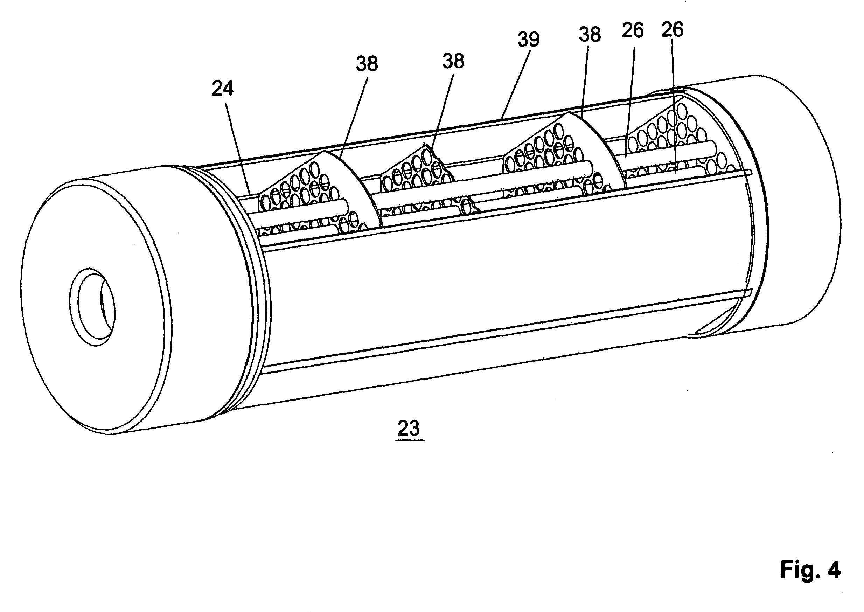

- Fig. 4: eine schematische Darstellung eines Gehäuses mit Mantelraum des Wärmetauschers in einem Ausführungsbeispiel;

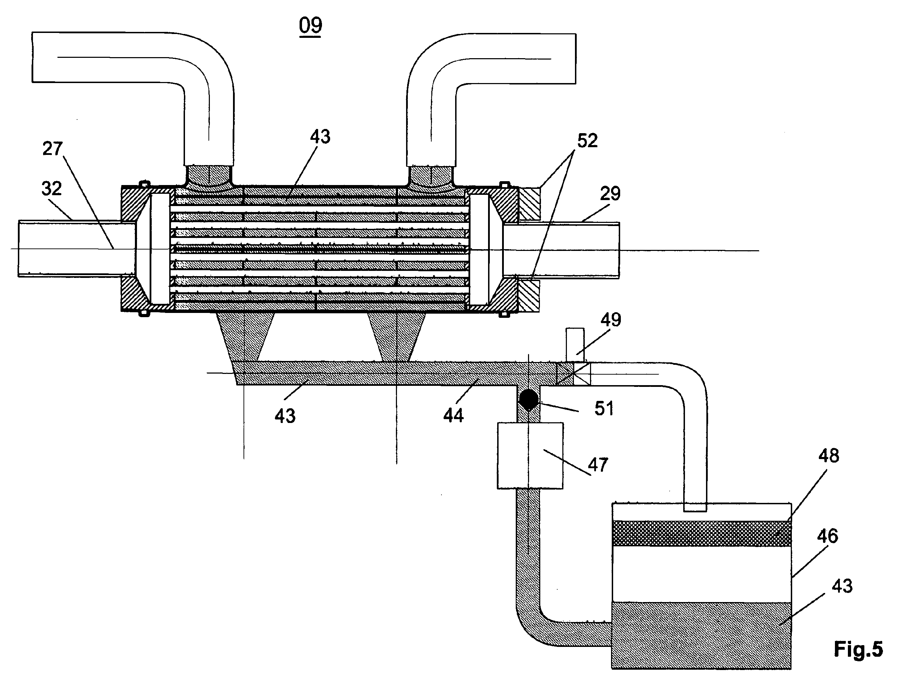

- Fig. 5: eine schematische Darstellung des Wärmetauschers in einem Reinigungszustand;

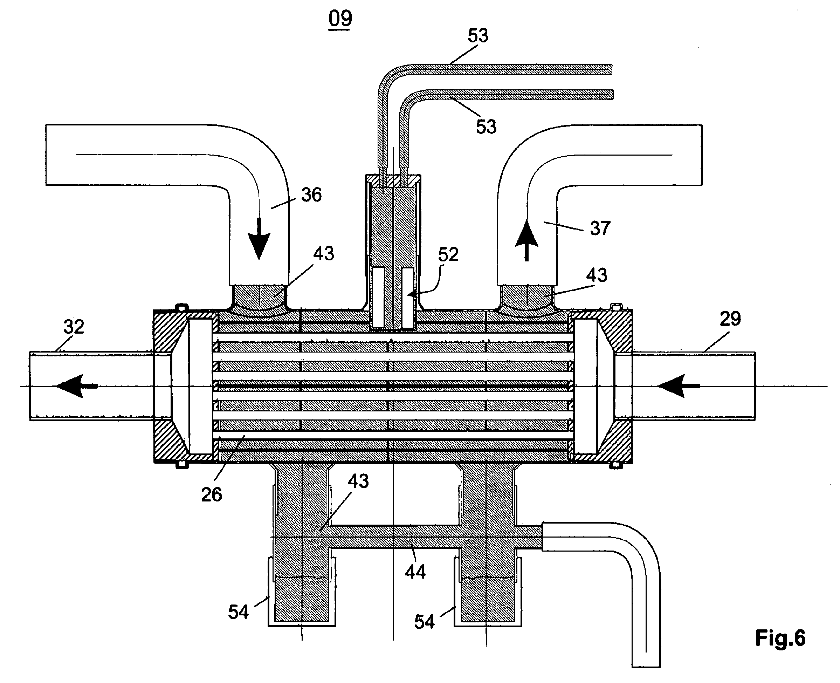

- Fig. 6: eine schematische Darstellung eines weiteren Ausführungsbeispiels.

Eine Anlage 01 und/oder System 01, insbesondere ein Blockheizkraftwerk (BHKW) 01 weist beispielsweise zumindest einen Antrieb 02 eines Generators 03, mindestens eine erste Leitung 04 eines ersten Wärmeträgermediums 06, mindestens eine zweite Leitung 07 eines zweiten Wärmeträgermediums 08 und einen ersten Wärmeübertrager 09 auf. Der erste Wärmeübertrager 09 tauscht Wärme des ersten Wärmeträgermediums 06 mit Wärme des zweiten Wärmeträgermediums 08 aus.

Der Generator 03 erzeugt Strom, der an mindestens einen Verbraucher 11, vorzugsweise über mindestens eine Elektronik 12 oder Leistungselektronik 12 gesteuert oder geregelt und/oder überwacht wird, geleitet wird.

Im vorliegenden Ausführungsbeispiel ist der Antrieb 02 des Generators 03 als Motor 02, insbesondere Verbrennungsmotor 02 ausgeführt. Ein Abtrieb des Motors 02 ist an einen Antrieb des Generators 03 beispielsweise mittels eines Antriebsmittels 13, insbesondere Getriebe, Zugmittel oder direkt gekoppelt.

Dieser Motor 02 wird von dem ersten Wärmeträgermedium 06 temperiert, wobei dieses Wärmeträgermedium 06 vorzugsweise als Flüssigkeit ausgeführt ist und in mindestens einer Leitung 04 strömt. Mittels dieser Leitung 04 wird zumindest ein Teil des Gehäuses des Motors 02 von dem Wärmeträgermedium 06 durchströmt und/oder diese Leitung 04 ist Teil des Gehäuses (z.B. in Form von mindestens eines Hohlraums und/oder Öffnung und/oder Bohrung). Vorzugsweise ist diese Leitung 04 Teil eines Kreislaufes, der vorzugsweise zumindest während des Betriebszustands des BHKW 01 geschlossen ist. Die Motor- und Abgaswärme dient gleichzeitig zur Erwärmung eines dritten Wäremübertragermediums 14. Der Motor läuft in diesem Fall in einer sog. Kraft-Wärme-Koppelung.

Mittels des ersten Wärmeübertragers 09 wird Wärme von dem zweiten Wärmeträgermedium 08 auf das erste, den Motor 02 temperierenden Wärmeträgermedium 06 übertragen.

Das erste Wärmeträgermedium 06 dient zum Weiterleiten der durch den Motor 02 erzeugten Wärme an einen Verbraucher 16. Dies erfolgt vorzugsweise unter Zwischenschaltung eines Wärmespeichers 17, beispielsweise mindestens einer dritten Leitung 18 mit dem dritten Wärmeträgermedium 14 und gegebenenfalls eines weiteren Wärmetauschers 19. Vorzugsweise sind zumindest das Wärmeträgermedium 06 des Motors 02 und das Wärmeträgermedium 14 des Verbrauchers 16 strömungstechnisch entkoppelt. Das dritte Wärmeträgermedium 14 wird in dem Wärmespeicher 17 gespeichert. Der Wärmespeicher 17 weist im vorliegenden Beispiel einen Zulauf 21 für kühles Wärmeträgermedium 14, vorzugsweise Wasser und einen Ablauf 22 für mindestens eine Leitung an den mindestens einen Verbraucher 16, beispielsweise mindesten ein Heizelement für insbesondere ein Gebäude, auf.

Das erste Wärmeträgermedium 06, insbesondere ein flüssiges Wärmeträgermedium 06 und das zweite Wärmeträgermedium 08, insbesondere ein gasartiges Wärmeträgermedium 08, beispielsweise des Motors 02 werden dem ersten Wärmeübertrager 09 zugeführt. Dieses gasartige Wärmeträgermedium 08 ist vorzugsweise ein durch Verbrennung entstehendes Abgas 08 eines Verbrennungsmotors 02, insbesondere des BHKW 01.

Dieser erste Wärmeübertrager 09 ist daher insbesondere als Abgaswärmeübertrager 09 ausgebildet. Dieser Abgaswärmeübertrager 09 ist beispielsweise einer Wärmekraftmaschine, insbesondere einem Verbrennungsmotor 02 eines BHKW 01 oder eines Kraftfahrzeuges oder eines Notstromaggregates usw. nachgeschaltet.

Der Wärmeübertrager 09 weist ein Gehäuse 23 mit einem Mantelraum 24 auf. In diesem Mantelraum 24 ist zumindest eine Leitung 26, d.h. ein Tauschermittel 26 für ein Wärmeträgermedium angeordnet. Diese Leitung 26 des einen Wärmeträgermediums 06 (insbesondere des flüssigen, beispielsweise den Motor 02 temperierenden Wärmeträgermediums, welches insbesondere durch die Innenwand der Leitung 26 geführt ist) 06 wird zum Wärmeaustausch von einem anderen Wärmeträgermedium (insbesondere des gasförmige Wärmeträgermediums 08 des Motors 02, beispielsweise Abgas 08) zumindest teilweise umgeben (vorzugsweise an seiner Außenwand), vorzugsweise zumindest teilweise umströmt.

Vorzugsweise ist eine Längsausdehnung des Gehäuses 23 größer als eine senkrecht zur Längsausdehnung angeordnete Querausdehnung. Durch die Längsausdehnung wird eine Längsachse 27 des Gehäuses 23 und damit des Wärmeübertragers 09 festgelegt. Vorzugsweise ist das Gehäuse 23 des Wärmetauschers 09 bezogen auf seine Längsachse 27 im Wesentlichen horizontal ausgerichtet. Die Längsachse 27 des Gehäuses 23 ist zumindest während des Betriebszustandes vorzugsweise horizontal und/oder vorzugsweise liegend ausgerichtet.

Im vorliegenden Ausführungsbeispiel ist das Gehäuse 23 zylinderartig ausgeführt.

Beispielsweise ist an einer Stirnseite 28 des Gehäuses 23 mindestens eine Zuleitung 29 des einen Wärmeträgermediums 06 und an der anderen Stirnseite 31 des Gehäuses 23 eine Ableitung 32 des einen Wärmeträgermediums 06 angeordnet. Zwischen Zuleitung 29 und Ableitung 32 ist die mindestes eine Leitung 26 des einen Wärmeträgermediums 06, d.h. ein Tauschermittel 26 angeordnet.

Vorzugsweise ist in dem Mantelraum 24 eine Vielzahl von dem einen Wärmetauschermedium 06 durchströmten Leitungen 26, d.h. eine Vielzahl von Tauschermitteln 26 angeordnet. Vorzugsweise sind die Leitungen 26 gleichzeitig mit dem einen Wärmetauschermedium gefüllt und/oder durchströmt. Insbesondere ist der Wärmeübertrager 09 als Rohrbündelwärmetauscher 09 ausgebildet, d.h. über einen Verteiler 33 wird das Wärmetauschermedium 06 von der Zuleitung 29 auf mehrere Leitungen 26 aufgeteilt. Diese mehrere Leitungen 26 sind vorzugsweise mehrere parallel angeordnete Rohre 26 (Außendurchmesser beispielsweise 8 mm, Innendurchmesser beispielsweise 7 mm, Länge beispielsweise 320 mm).

Der Rohrbündelwärmetauscher 09 weist beispielsweise eine Länge von ca. 430 mm und einen Durchmesser von 125 mm auf. Im Wärmeübertrager 09 herrscht beispielsweise eine Temperatur von 250° C bis 400° C.

Vorzugsweise am gegenüberliegenden Ende des Gehäuses 23 wird über einen Sammler 34 das Wärmeträgermedium 06 von den Leitungen 26 der Ableitung 32 zugeführt. Vorzugsweise sind an der Mantelfläche des Gehäuses 23 eine Zuleitung 36 des anderen Wärmeträgermediums 08 und eine Ableitung 37 des anderen Wärmeträgermediums 08 angeordnet, womit das andere Wärmeträgermedium 08 in den Mantelraum 24 des Wärmeübertragers 09 transportiert wird.

Die Zuleitung 36 bzw. Ableitung 37 des einen Wärmeträgermediums 08 ist benachbart zu der Ableitung 32 bzw. Zuleitung 29 des anderen Wärmeträgermediums 06. Die Zuleitung 36 des einen Wärmeträgermediums 08 und die Ableitung 32 des anderen Wärmeträgermediums 06 sind bevorzugt an einem Ende des Gehäuses 23 und die Ableitung 37 des einen Wärmeträgermediums 08 und die Zuleitung 29 des anderen Wärmeträgermediums 06 sind an einem anderen, insbesondere gegenüberliegenden Ende des Gehäuses 23 angeordnet. Ein Abstand der beiden Enden des Gehäuses legen eine Länge des Gehäuses fest.

Bei einer liegenden und/oder annähernd horizontalen Anordnung des Gehäuses 23 sind die Zuleitung 36 und/oder Ableitung 37 des einen Wärmeträgermediums 08 vorzugsweise oberhalb der Längsachse 27 des Gehäuses 23, insbesondere oben am Gehäuse 23, besonders bevorzugt am obersten Bereich des Gehäuses 23 angeordnet.

Innerhalb des Mantelraums 24 des Gehäuses 23 sind zur gezielten Leitung des Wärmeträgermediums 08 mindestens ein, vorzugsweise mehrere Schottelemente 38 angeordnet. Diese Schottelemente 38 bewirken beispielsweise einen meanderartigen Verlauf des Wärmeträgermediums 08 durch den Mantelraum 24.

Bei einem Beispiel eines zylinderförmigen Mantelraums 24 bzw. Gehäuses 23 sind die Schottelemente 38 jeweils weitgehend als plattenartiges Kreissegment (vorzugsweise mit einem Mittelpunktswinkel größer als 180°, insbesondere größer 270°) oder Vieleck (insbesondere Sechseck) ausgeführt. Durch diese Kreissegmente oder Vielecke ragen die Leitungen 26, insbesondere die Rohre 26 des einen Wärmeträgermediums 06. Bei dem vorliegenden Ausführungsbeispiel sind fünf Seiten des Sechseckes innerhalb des Gehäuses 23 mit Abdeckelementen 39 verbunden. Die Abdeckelemente 39 verbinden zumindest zwei Schottelemente 38 miteinander. Die verbleibende Seite des Sechseckes ist nicht abgedeckt, so dass sich zwischen dem Sechseck und dem Gehäuse eine Öffnung 41 bildet.

An einem Teil des jeweiligen Schottelementes 38 und/oder dem Gehäuse 23 wird eine Öffnung 41 für das Wärmeträgermedium 08 gebildet. In Richtung der Längsachse 27 des Gehäuses 23 sind Schottelemente 38 bezüglich ihrer Öffnung 41 für das meanderartig fließende Wärmeträgermedium 08 alternierend, beispielsweise oben und unten angeordnet.

Insbesondere ist im Mantelraum 24 des Gehäuses 23 mindestens ein Filterelement 42, vorzugsweise mehrere Filterelemente 42 angeordnet. Dieses mindestens eine Filterelement 42 ist im Betriebszustand von dem einen Wärmeträgermedium 08, insbesondere von dem Abgas 08 des Motors 02 zumindest teilweise durchströmt und vorzugsweise in einem Reinigungszustand zumindest teilweise von einem Reinigungsmedium 43 umgeben.

Im Ausführungsbeispiel des Rohrbündelwärmetauschers 09 sind zwischen einzelnen Rohren 26 Filterelemente 42 angeordnet. Dabei können mehrere beispielsweise plattenartige Filterelemente 42 zumindest in Strömungsrichtung des Wärmeträgermediums 08 gesehen hintereinander angeordnet sein. Auch können Filterelemente 42 nebeneinander (vorzugsweise zwischen den Schottelementen 38) und/oder übereinander (vorzugsweise zwischen den Rohren 26 des Rohrbündels) und/oder parallel zueinander angeordnet sein.

Das mindestes eine Filterelement 42 ist vorzugsweise als Filtermatte, insbesondere aus Gewebe und/oder Netz und/oder Lochplatte, vorzugsweise aus Drahtgewebe, ausgebildet. Insbesondere sind eine Maschenweite und/oder ein Lochabstand kleiner als 0,5 mm, insbesondere kleiner als 0,1 mm. Besonders bevorzugt sind die Maschenweite und/oder der Lochabstand zwischen 0,02 mm und 0,067 mm. Auch können im Falle mehrere angeordnete Filterelemente 42, Filterelemente 42 mit unterschiedlich großer Maschenweite und/oder großem Lochabstand verwendet werden. Vorzugsweise werden dabei die Maschenweite und/oder der Lochabstand der Filterelemente 42 bezogen auf eine Durchströmrichtung des Wärmeträgermediums 08 in Durchströmrichtung kleiner. Das Filterelement 42 ist vorzugsweise zumindest teilweise oder vollständig rostfrei ausgebildet, beispielsweise aus rostfreiem Stahl, Aluminium oder Keramik.

Am Gehäuse 23 ist mindestens eine weitere Leitung 44 zur Zufuhr und/oder Abfuhr eines Reinigungsmediums 43 in den Mantelraum 24 angeordnet. Insbesondere sind eine Zuleitung und eine Ableitung von Reinigungsmedium 43 am Gehäuse 23 vorgesehen, wobei zumindest die Ableitung vorzugsweise unterhalb der Längsachse 27 des Gehäuses 23 angeordnet ist. Insbesondere ist eine Mündung der Ableitung zumindest teilweise am tiefsten Punkt des Mantelraumes 24 des Gehäuses 23 angeordnet.

Die eine Leitung 44 zur Zufuhr und/oder Abfuhr und/oder die Zuleitung und die Ableitung von Reinigungsmedium 43 sind beispielsweise mittels mindestens einer weiteren Leitung vorzugsweise mit einem Vorratsbehälter 46 für das Reinigungsmedium 43 verbunden. Vorzugsweise ist eine Pumpe 47 zum Transport, insbesondere Zuführen und/oder Abführen, des Reinigungsmediums 43 angeordnet. Diese Pumpe 47 kann eine vorbestimmte Menge von Reinigungsmedium 43, vorzugsweise mittels einer elektrischen Steuerung oder Regelung, in den Mantelraum 24 des Gehäuses 23 transportieren. Zwischen Mantelraum 24 und Vorratsbehälter 46 und oder im Vorratsbehälter ist vorzugsweise mindestens ein Filtermedium 48 zum Reinigen des Reinigungsmediums 43 vorzugsweise im Rücklauf vorgesehen. Der Rücklauf des Reinigungsmediums 43 aus dem Mantelraum 24 zu dem Vorratsbehälter 46 erfolg vorzugsweise durch Schwerkraft des Reinigungsmediums 43. Um einen den Rücklauf des Reinigungsmediums 43 gezielt zu ermöglichen, sind zwischen Mantelraum 24 und Vorratsbehälter 46 beispielsweise ein Sperrventil 49 und in Rücklaufrichtung gesehen vor der Pumpe 47 ein Rückschlagventil 51 angeordnet.

Das Reinigungsmedium 43 ist vorzugsweise eine Flüssigkeit (z.B. Wasser) und kann mit Additiven (Korrosionsschutz und/oder Reinigungswirkung) versehen sein.

Das Reinigungsmedium 43 ist insbesondere zusätzlich zu dem Wärmeträgermedium 08 vorgesehen.

Zum Beaufschlagen der Reinigungsflüssigkeit 43 mit Schwingungen ist mindestens eine Erregereinrichtung 52, insbesondere ein Ultraschallerreger 52 (Schwingfrequenz insbesondere größer 20.000 Hz, vorzugsweise 20 kHz bis 60 kHz, vorteilhaft ca. 40kHz) vorgesehen. Diese Erregereinrichtung 52 ist vorzugsweise am Gehäuse 23 des Wärmeübertragers 09 und/oder vorzugsweise außerhalb des Mantelraumes 24 angeordnet. Insbesondere ist die Erregereinrichtung an einer Außenseite des Gehäuses 23 angeordnet. In einem Ausführungsbeispiel ist zumindest eine Erregereinrichtung 09 an der Stirnseite 28 oder beiden Stirnseiten 28; 31 des Gehäuses 23 angeordnet. Besonders bevorzugt ist die Erregereinrichtung 52 im Bereich des Zuleitung 29 des Wärmeübertragers 09 für das erste Wärmeträgermedium 06, insbesondere der Temperierflüssigkeit des Motors 02, insbesondere in einem den Verteiler 33 und/oder die Zuleitung 29 des kühleren Wärmeträgermediums 06 aufnehmenden Abschnitt des Wärmeübertragers 09 angeordnet. Ein auf eine Längsachse des Wärmeübertragers 09 projizierter Abstand zwischen einer der Zuleitung 29 für das erste Wärmeträgermedium 06zugewandten Begrenzung der Erregereinrichtung 52 und einer der Erregereinrichtung 52 zugewandten Begrenzung der Öffnung der Zuleitung 29 für das erste Wärmeträgermedium 06 im Gehäuse 23 beträgt vorzugsweise höchstens 40% , insbesondere höchstens 20% der Länge des Gehäuses 23. Ein Abstand zwischen einer dem die Zuleitung 29 für das erste Wärmeträgermedium 06 aufweisenden Ende des Gehäuses 23 zugewandten Begrenzung der Erregereinrichtung 52 und dem die Zuleitung 29 für das erste Wärmeträgermedium 06 aufweisenden Ende des Gehäuses 23 beträgt vorzugsweise höchstens 40% , insbesondere höchstens 20% der Länge des Gehäuses 23. In einem sich den diesen Bereich des Zuleitung 29 in Richtung Ableitung 32 anschließenden Abschnitt des Wärmeübertragers 09 ist vorzugsweise die Ableitung 37 des anderen Wärmeträgermediums 08 angeordnet. Insbesondere ist die Erregereinrichtung 52 in einem Bereich des Gehäuses 23 mit einer ersten Temperatur vorgesehen. Diese erste Temperatur des Bereiches des Gehäuses 23 beträgt vorzugsweise höchstens 40% der in einem anderen Bereich des Gehäuses auftretende Maximaltemperatur (z.B. über 200 °C) des Gehäuses 23 und/oder vorzugsweise 40 °C bis 120 °C.

Bei einem anderen Ausführungsbeispiel ragt die Erregereinrichtung 52 zumindest teilweise in den Mantelraum 24 des Gehäuses 23, beispielsweise bei liegendem Gehäuse 23 von oben, hinein.

Vorzugsweise wird in diesem Fall die Erregereinrichtung 52 zumindest während des Betriebszustandes des Wärmeübertragers 09 gekühlt, vorzugsweise mittels Flüssigkeit, die von einem Leitungssystem 53 zu der Erregereinrichtung 52 hin und von der Erregereinrichtung 52 weg transportiert wird.

An dem Gehäuse 23 kann vorzugsweise im unteren Bereich mindestens eine Öffnung zum Transport von Schmutzpartikeln, insbesondere Ruß angeordnet sein. An dieser Öffnung ist vorzugsweise ein beispielsweise abnehmbarer Behälter 54 zur Aufnahme von diesen Schmutzpartikeln vorgesehen. Im vorliegenden Beispiel sind mehrere, beispielsweise zwei Öffnungen mit entsprechenden Behältern 54 angeordnet.

Vorteilhaft sind in diesem Beispiel die Öffnungen zum Transport von Schmutzpartikeln gleichzeitig auch die Öffnungen für die Zuleitung und Ableitung von Reinigungsmedium 43. Dabei kann der eine oder die mehreren Behälter 54 an die Leitung 44 zum Transport des Reinigungsmediums 43 angeschlossen sein. Vorzugsweise werden die Schmutzpartikel zumindest teilweise mittels Schwerkraft aus dem Mantelraum 24 des Gehäuses 23 in den mindestens einen Behälter 54 transportiert.

In einem Betriebszustand des Wärmeübertragers 09 und beispielsweise des Motors 02 wird das eine Wärmeträgermedium 06, insbesondere die den Motor 02 temperierende Flüssigkeit durch mindestens eine bevorzugt mit dem Motor 02 verbundene Leitung 26 im Mantelraum 24, insbesondere durch das Rohrbündel, des Wärmeübertragers 09 transportiert. Das andere Wärmeträgermedium 08, insbesondere das Abgas 08 des Motors 02, wird in den Mantelraum 24 des Gehäuses 23 transportiert. Dabei wird der Mantelraum 24 zumindest teilweise mit dem anderen Wärmeträgermedium 08 gefüllt und umgibt zumindest teilweise die mindest eine Leitung 26 des einen Wärmeträgermediums 06.

Vorzugsweise ist der Mantelraum 24 des Wärmeübertragers 09 vollständig mit Abgas 08 gefüllt und umströmt das den Motor 02 temperierende Flüssigkeit transportierende Rohrbündel des Wärmeübertragers 09. Insbesondere durchströmt das Abgas 08 den Mantelraum 24 des Gehäuses 23 meanderartig. Auch durchströmen beispielsweise das Abgas 08 des Motors 02 und die den Motor 02 temperierende Flüssigkeit den Wärmeübertrager 09 gegenläufig. Beispielsweise tritt an einer Mantelfläche des Gehäuses 23 eine Temperatur von ca. 300 °C und einer Stirnseite 28 des Gehäuses 23 im Bereich des Zulaufes der Temperierflüssigkeit des Motors 02 eine Temperatur von ca. 70 °C auf.

Bevorzugt durchströmt das Abgas im Betriebszustand nacheinander mehrere Filterelemente 42.

In einem Reinigungszustand ist der Mantelraum 24 des Wärmeübertragers 09 zumindest teilweise mit dem Reinigungsmedium 43 gefüllt und umgibt zumindest teilweise die mindest eine Leitung 26 des anderen Wärmeträgermediums 06. Vorzugsweise ist die mindestens eine Leitung 26 in dem Reinigungszustand mit dem anderen Wärmeträgermedium 06 gefüllt. Vorzugsweise ist der Mantelraum 24 des Wärmeübertragers 09 vollständig mit Reinigungsmedium 43 gefüllt und umgibt das den Motor 02 temperierende Flüssigkeit transportierende Rohrbündel des Wärmeübertragers 09. Insbesondere umgibt und/oder berührt das Reinigungsmedium im Reinigungszustand die Schottelemente 38 und/oder das mindestens eine Filterelement 42 oder die Filterelemente 42 zumindest teilweise, vorzugsweise vollständig. Vorzugsweise wird dazu aus dem Vorratsbehälter 46 Reinigungsmedium 43 mittels der Pumpe 47 in den Mantelraum 24 transportiert. Zumindest das in dem Mantelraum 24 befindliche Reinigungsmedium 43 wird während der Reinigung in dem Reinigungszustand von der Erregereinrichtung 52 bewegt, insbesondere mittels der Ultraschalleinrichtung 52 mit Schwingungen beaufschlagt. Damit erfolgt beispielsweise mittels Wellen und/oder Kavitation eine Reinigung des Mantelraums 24 und/oder der mindestens einen Leitung 26 des anderen Wärmeträgermediums 06 (insbesondere des Rohrbündels).

Der Reinigungszustand kann manuell oder mittels einer Steuereinrichtung beispielsweise zeitgesteuert in vorgebaren Intervallen oder sensorgesteuert ausgelöst werden.

Zum Erreichen des Reinigungszustandes wird beispielsweise der Strom des einen Wärmeträgermediums 08, insbesondere des Abgases 08, abgestellt, vorzugsweise das Sperrventil 49 im Rücklauf geschlossen und mittels der Pumpe 47 Reinigungsmedium 43 in den Mantelraum 24 dosiert. Spätestens nach Erreichen des vorgegeben Füllgrad des Mantelraums 24 wird das Reinigungsmedium 43 im Mantelraum mit Bewegungen, insbesondere Ultraschall beaufschlagt und somit der Mantelraum 24 und beispielsweise das Rohrbündel gereinigt.

Nach Beendigung des Füllens des Mantelraumes 24 wird vorzugsweise die Pumpe 47 abgeschaltet und nach Beendigung des Reinigungsprozesses das Sperrventil 49 geöffnet. Der Mantelraum 24 wird vom Reinigungsmedium 43 entleert. Das Reinigungsmedium 43 fließt vorzugsweise durch das Filtermedium 48 gereinigt zurück in den Vorratsbehälter 46. Das bereits in einem ersten Reinigungsvorgang benutzte Reinigungsmedium 43 wird vorzugsweise in mindestem einem oder mehreren weiteren Reinigungsvorgängen verwendet. Insbesondere wird der bereits beschriebene Füllvorgang und/oder Reinigungsvorgang mit dem bereits benutzten Reinigungsmedium 43 erneut durchgeführt, insbesondere nach einem zwischengeschalteten Betriebszustand des Wärmeübertragers 09.

### Bezugszeichenliste

- 01: Blockheizkraftwerk
- 02: Antrieb, Motor, Verbrennungsmotor
- 03: Generator
- 04: Leitung, erste
- 05: -
- 06: Wärmeträgermedium, erstes
- 07: Leitung, zweite
- 08: Wärmeträgermedium, zweites; Abgas
- 09: Wärmeübertrager, erster; Abgaswärmeübertrager ; Rohrbündelwärmetauscher
- 10: -
- 11: Verbraucher
- 12: Elektronik, Leistungselektronik
- 13: Antriebsmittel
- 14: Wärmeträgermedium, weiteres
- 15: -
- 16: Verbraucher
- 17: Wärmespeicher
- 18: Leitung, dritte
- 19: Wärmeübertrager
- 20: -
- 21: Zulauf (14)
- 22: Ablauf (14)
- 23: Gehäuse (09)
- 24: Mantelraum (09)
- 25: -
- 26: Leitung; Tauschermittel; Rohr
- 27: Längsachse (09)
- 28: Stirnseite (23)
- 29: Zuleitung (06)
- 30: -
- 31: Stirnseite (23)
- 32: Ableitung (06)
- 33: Verteiler
- 34: Sammler
- 35: -
- 36: Zuleitung (08)
- 37: Ableitung (08)
- 38: Schottelement
- 39: Abdeckelement
- 40: -
- 41: Öffnung
- 42: Filterelement
- 43: Reinigungsmedium
- 44: Leitung (43)
- 45: -
- 46: Vorratsbehälter
- 47: Pumpe
- 48: Filtermedium (43)
- 49: Sperrventil
- 50: -
- 51: Rückschlagventil
- 52: Erregereinrichtung; Ultraschallerreger
- 53: Leitungssystem

## Patentansprüche

1. Blockheizkraftwerk (BHKW) (01) mit zumindest einem einen Generator (03) antreibenden Verbrennungsmotor (02), mit mindestens einer ersten Leitung (04) eines ersten, den Verbrennungsmotor (02) temperierenden
Wärmeträgermediums (06), mit mindestens einer zweiten Leitung (07) eines zweiten, als Abgas (08) des Verbrennungsmotors (02) ausgebildeten Wärmeträgermediums (08) und mit einem ersten als Abgaswärmeübertrager (09) ausgebildeten Wärmeübertrager (09), wobei in einem Mantelraum (24) des Abgaswärmeübertragers (09) mindestens ein von dem ersten Wärmeträgermedium (06) durchströmtes Tauschermittel (26) angeordnet ist, **dadurch gekennzeichnet, dass** in einem Betriebszustand das mindestens eine Tauschermittel (26) zumindest teilweise von Abgas (08) umgeben ist, und am Gehäuse (23) mindestens eine weitere Leitung (44) zur Zufuhr und/oder Abfuhr eines Reinigungsmediums (43) in den Mantelraum (23) angeordnet ist und dass der Abgaswärmeübertrager (09) zumindest eine das Reinigungsmedium (43) zumindest zeitweise in einem Reinigungszustand bewegbare und/oder bewegende Erregereinrichtung (52) aufweist.

2. Blockheizkraftwerk nach Anspruch 1, **dadurch gekennzeichnet, dass** im Betriebszustand einen meanderartigen Verlauf des Abgases (08) durch den Mantelraum (24) bewirkende Schottelemente (38) in dem Mantelraum (24) vorgesehen sind.

3. Blockheizkraftwerk nach Anspruch 1, **dadurch gekennzeichnet, dass** in dem Mantelraum (24) des Abgaswärmeübertragers (09) zumindest zeitweise im Reinigungszustand von dem Reinigungsmedium (43) zumindest teilweise umgebene Schottelemente (38) angeordnet sind.

4. Blockheizkraftwerk nach Anspruch 1, **dadurch gekennzeichnet, dass** in dem Mantelraum (24) des Gehäuses (23) des Abgaswärmeübertragers (09) mindestens ein im Betriebszustand von dem Abgas (08) zumindest teilweise durchströmbares und/oder durchströmtes Filterelement (42) angeordnet ist.

5. Blockheizkraftwerk nach Anspruch 1, **dadurch gekennzeichnet, dass** im Mantelraum (24) des Gehäuses (23) des Abgaswärmeübertragers (09) mindestens ein zumindest zeitweise im Reinigungszustand von dem Reinigungsmedium (43) zumindest teilweise umgebene Filterelement (42) angeordnet ist.

6. Blockheizkraftwerk nach Anspruch 1, **dadurch gekennzeichnet, dass** der Abgaswärmeübertrager (09) als mehrere Rohre (26) aufweisender Rohrbündelwärmetauscher (09) ausgebildet ist

7. Blockheizkraftwerk nach Anspruch 6, **dadurch gekennzeichnet, dass** zwischen einzelnen Rohren (26) des Rohrbündelwärmetauschers (09) mindestens ein Filterelement (42) und/oder mindestens ein Schottelement (38) angeordnet ist.

8. Blockheizkraftwerk nach Anspruch 1, **dadurch gekennzeichnet, dass** die mindestens einer weitere Leitung (44) mit einem Vorratsbehälter (46) für das Reinigungsmedium (43) verbunden ist und dass eine Pumpe (47) zum Transport des Reinigungsmediums (43) angeordnet ist.

9. Blockheizkraftwerk nach Anspruch 8, **dadurch gekennzeichnet, dass** zwischen dem Abgaswärmeübertrager (09) und dem Vorratsbehälter (46) und/oder in dem Vorratsbehälter (46) mindestens ein Filtermedium (48) für das Reinigungsmedium (43) angeordnet ist.

10. Blockheizkraftwerk nach Anspruch 1, **dadurch gekennzeichnet, dass** die Erregereinrichtung (52) als Ultraschallerreger (52) ausgebildet ist.

11. Blockheizkraftwerk nach Anspruch 1, **dadurch gekennzeichnet, dass** in dem Reinigungszustand der Mantelraum (24) des Abgaswärmeübertragers (09) zumindest teilweise mit einem Reinigungsmedium (43) gefüllt ist.

12. Verfahren zur Verwendung eines Blockheizkraftwerkes (BHKW) (01) mit zumindest einem einen Generator (03) antreibenden Verbrennungsmotor (02), mit mindestens einer ersten Leitung (04) eines ersten, den Verbrennungsmotor (02) temperierenden Wärmeträgermediums (06), mit mindestens einer zweiten Leitung (07) eines zweiten, als Abgas (08) des Verbrennungsmotors (02) ausgebildeten Wärmeträgermediums (08) und mit einem ersten als Abgaswärmeübertrager (49) ausgebildeten Wärmeübertrager (09), wobei in einem Mantelraum (24) des Abgaswärmeübertragers (09) mindestens ein von dem ersten Wärmeträgermedium (06) durchströmtes Tauschermittel (26) angeordnet ist, **dadurch gekennzeichnet**, das in einem Betriebszustand das mindestens eine Tauschermittel (26) zumindest teilweise von Abgas (08) umgeben ist, und aus einem Vorratsbehälter (46) Reinigungsmedium (43) mittels einer Pumpe (47) in den Mantelraum (24) transportiert wird, dass in einem Reinigungszustand der Mantelraum (24) des Abgaswärmeübertragers (09) zumindest teilweise mit dem Reinigungsmedium (43) gefüllt ist, dass zumindest das in dem Mantelraum (24) befindliche Reinigungsmedium (43) von einer Erregereinrichtung (52) bewegt wird.

13. Verfahren zur Verwendung eines Blockheizkraftwerkes (BHKW) (01) nach Anspruch 12, **dadurch gekennzeichnet, dass** der Reinigungszustand mittels einer Steuereinrichtung zeitgesteuert oder sensorgesteuert ausgelöst wird.

14. Verfahren zur Verwendung eines Blockheizkraftwerkes (BHKW) (01) nach Anspruch 12, **dadurch gekennzeichnet, dass** nach der Reinigung des Mantelraumes (24) das Reinigungsmedium (43) durch ein Filtermedium (48) gereinigt zurück in den Vorratsbehälter (46) transportiert wird.

15. Verfahren zur Verwendung eines Blockheizkraftwerkes (BHKW) (01) nach Anspruch 12, **dadurch gekennzeichnet, dass** das bereits in einem ersten Reinigungsvorgang benutzte Reinigungsmedium (43) in mindestem einem oder mehreren weiteren Reinigungsvorgängen verwendet wird.

## Claims

1. Cogeneration plant (BHKW) (01) with at least one internal combustion engine (02) driving a generator (03), with at least one first line (04) of a first heat transfer medium (06) controlling the temperature of the internal combustion engine (02), with at least one second line (07) of a second heat transfer medium (08) formed as exhaust gas (08) of the internal combustion engine (02) and with a first heat exchanger (09) designed as an exhaust gas heat exchanger (09), at least one exchanger means (26) flowed through by the first heat transfer medium (06) being arranged in a shell space (24) of the exhaust gas heat exchanger (09), **characterised in that** in one operating state the at least one exchanger means (26) is surrounded at least partially by exhaust gas (08), and on the housing (23) at least one further line (44) for the supply and/or removal of a cleaning medium (43) is arranged in the shell space (23) and **in that** the exhaust gas heat exchanger (09) has at least one excitation device (52) that can move and/or moving the cleaning medium (43) at least occasionally in a cleaning state.

2. Cogeneration plant according to Claim 1, **characterised in that** in the operating state partition elements (38) effecting a meandering course of the exhaust gas (08) through the shell space (24) are provided in the shell space (24).

3. Cogeneration plant according to Claim 1, **characterised in that** at least partially surrounded partition elements (38) are arranged at least occasionally in the shell space (24) of the exhaust gas heat exchanger (09) in the cleaning state of the cleaning medium (43).

4. Cogeneration plant according to Claim 1, **characterised in that** at least one filter element (42) at least partially flowable through and/or flowed through in the operating state by the exhaust gas (08) is arranged in the shell space (24) of the housing (23) of the exhaust gas heat exchanger (09).

5. Cogeneration plant according to Claim 1, **characterised in that** at least one filter element (42) at least partially surrounded by the cleaning medium (43) at least occasionally in the cleaning state is arranged in the shell space (24) of the housing (23) of the exhaust gas heat exchanger (09).

6. Cogeneration plant according to Claim 1, **characterised in that** the exhaust gas heat exchanger (09) is designed as a tube bundle heat exchanger (09) containing a number of tubes (26).

7. Cogeneration plant according to Claim 6, **characterised in that** at least one filter element (42) and/or at least one partition element (38) is arranged between individual tubes (26) of the tube bundle heat exchanger (09).

8. Cogeneration plant according to Claim 1, **characterised in that** the at least one further line (44) is connected to a reservoir (46) for the cleaning medium (43) and **in that** a pump (47) is arranged for the transport of the cleaning medium (43).

9. Cogeneration plant according to Claim 8, **characterised in that** at least one filter medium (48) for the cleaning medium (43) is arranged between the exhaust gas heat exchanger (09) and the reservoir (46) and/or in the reservoir (46).

10. Cogeneration plant according to Claim 1, **characterised in that** the excitation device (52) is designed as an ultrasonic exciter (52).

11. Cogeneration plant according to Claim 1, **characterised in that** in the cleaning state the shell space (24) of the exhaust gas heat exchanger (09) is filled at least partially with a cleaning medium (43).

12. Method for the use of a cogeneration plant (BHKW) (01) with at least one internal combustion engine (02) driving a generator (03), with at least one first line (04) of a first heat transfer medium (06) controlling the temperature of the internal combustion engine (02), with at least one second line (07) of a second heat transfer medium (08) formed as exhaust gas (08) of the internal combustion engine (02) and with a first heat exchanger (09) designed as an exhaust gas heat exchanger (09), at least one exchanger means (26) flowed through by the first heat transfer medium (06) being arranged in a shell space (24) of the exhaust gas heat exchanger (09), **characterised in that** in one operating state the at least one exchanger means (26) is surrounded at least partially by exhaust gas (08), and cleaning medium (43) is transported from a reservoir (46) into the shell space (24) by means of a pump (47), **in that** in one cleaning state the shell space (24) of the exhaust gas heat exchanger (09) is filled at least partially with the cleaning medium (43) and **in that** at least the cleaning medium (43) found in the shell space (24) is moved by an exciter device (52).

13. Method for the use of a cogeneration plant (BHKW) (01) according to Claim 12, **characterised in that** the cleaning state is initiated in a time-controlled or sensor-controlled manner by means of a control device.

14. Method for the use of a cogeneration plant (BHKW) (01) according to Claim 12, **characterised in that** after the cleaning of the shell space (24) the cleaning medium (43) cleaned by a filter medium (48) is transported back into the reservoir (46).

15. Method for the use of a cogeneration plant (BHKW) (01) according to Claim 12, **characterised in that** the cleaning medium (43) already used in a first cleaning operation is used in at least one or more further cleaning operations.

## Revendications

1. Centrale de cogénération (BHKW) (01) avec au moins un moteur à combustion interne (02) entraînant un générateur (03), avec au moins une première conduite (04) d'un premier fluide caloporteur (06) tempérant le moteur à combustion interne (02), avec au moins une deuxième conduite (07) d'un deuxième fluide caloporteur (08) réalisé comme gaz d'échappement (08) du moteur à combustion interne (02) et avec un premier échangeur de chaleur (09) réalisé comme échangeur de chaleur de gaz d'échappement (09), où au moins un moyen de transfert de chaleur (26) traversé par le premier fluide caloporteur (06) est disposé dans une coque (24) de l'échangeur de chaleur de gaz d'échappement (09), **caractérisée en ce que**, dans un état de fonctionnement, le ou les moyens de transfert de chaleur (26) sont au moins partiellement entourés de gaz d'échappement (08), **en ce qu'**au moins une autre conduite (44) pour l'amenée dans la coque (23) et/ou l'évacuation d'un fluide de nettoyage (43) est disposée sur le carter (23) et **en ce que** l'échangeur de chaleur de gaz d'échappement (09) comprend au moins un dispositif excitateur (52) refoulant au moins temporairement et/ou pouvant au moins temporairement refouler le fluide de nettoyage (43) dans un état de nettoyage.

2. Centrale de cogénération selon la revendication 1, **caractérisée en ce qu'**en état de fonctionnement, des éléments de cloisonnement (38) provoquant un écoulement en méandres des gaz d'échappement (08) dans la coque (24) sont prévus dans la coque (24).

3. Centrale de cogénération selon la revendication 1, **caractérisée en ce que** des éléments de cloisonnement (38) au moins partiellement entourés par le fluide de nettoyage (43) au moins temporairement en état de nettoyage, sont disposés dans la coque (24) de l'échangeur de chaleur de gaz d'échappement (09).

4. Centrale de cogénération selon la revendication 1, **caractérisée en ce qu'**au moins un élément de filtre (42) au moins partiellement traversé, et/ou pouvant être au moins partiellement traversé par les gaz d'échappement (08) en état de fonctionnement, est disposé dans la coque (24) du carter (23) de l'échangeur de chaleur de gaz d'échappement (09).

5. Centrale de cogénération selon la revendication 1, **caractérisée en ce qu'**au moins un élément de filtre (42) au moins partiellement entouré par le fluide de nettoyage (43) au moins temporairement en état de nettoyage, est disposé dans la coque (24) du carter (23) de l'échangeur de chaleur de gaz d'échappement (09).

6. Centrale de cogénération selon la revendication 1, **caractérisée en ce que** l'échangeur de chaleur de gaz d'échappement (09) est réalisé comme échangeur de chaleur à faisceau tubulaire (09) comportant plusieurs tubes (26).

7. Centrale de cogénération selon la revendication 6, **caractérisée en ce qu'**au moins un élément de filtre (42) et/ou au moins un élément de cloisonnement (38) sont disposés entre différents tubes (26) de l'échangeur de chaleur à faisceau tubulaire (09).

8. Centrale de cogénération selon la revendication 1, **caractérisée en ce que** l'autre conduite, ou les autres conduites (44) sont reliées à un réservoir (46) pour le fluide de nettoyage (43), et **en ce qu'**une pompe (47) est disposée pour le refoulement du fluide de nettoyage (43).

9. Centrale de cogénération selon la revendication 8, **caractérisée en ce qu'**au moins un milieu filtrant (48) pour le fluide de nettoyage (43) est disposé entre l'échangeur de chaleur de gaz d'échappement (09) et le réservoir (46), et/ou dans le réservoir (46).

10. Centrale de cogénération selon la revendication 1, **caractérisée en ce que** le dispositif excitateur (52) est réalisé comme excitateur à ultrasons (52).

11. Centrale de cogénération selon la revendication 1, **caractérisée en ce qu'**en état de nettoyage, la coque (24) de l'échangeur de chaleur de gaz d'échappement (09) est au moins partiellement remplie d'un fluide de nettoyage (43).

12. Procédé d'exploitation d'une centrale de cogénération (BHKW) (01) avec au moins un moteur à combustion interne (02) entraînant un générateur (03), avec au moins une première conduite (04) d'un premier fluide caloporteur (06) tempérant le moteur à combustion interne (02), avec au moins une deuxième conduite (07) d'un deuxième fluide caloporteur (08) réalisé comme gaz d'échappement (08) du moteur à combustion interne (02) et avec un premier échangeur de chaleur (09) réalisé comme échangeur de chaleur de gaz d'échappement (09), où au moins un moyen de transfert de chaleur (26) traversé par le premier fluide caloporteur (06) est disposé dans une coque (24) de l'échangeur de chaleur de gaz d'échappement (09), **caractérisé en ce que**, dans un état de fonctionnement, le ou les moyens de transfert de chaleur (26) sont au moins partiellement entourés de gaz d'échappement (08), **en ce que** du fluide de nettoyage (43) est refoulé au moyen d'une pompe (47) du réservoir (46) vers l'intérieur de la coque (24), **en ce que**, dans un état de nettoyage, la coque (24) de l'échangeur de chaleur de gaz d'échappement (09) au moins partiellement remplie de fluide de nettoyage (43), et **en ce qu'**au moins le fluide de nettoyage (43) se trouvant dans la coque (24) est refoulé par un dispositif excitateur (52).

13. Procédé d'exploitation d'une centrale de cogénération (BHKW) (01) selon la revendication 12, **caractérisé en ce que** l'état de nettoyage est déclenché au moyen d'un dispositif de commande, en fonction du temps ou d'un capteur.

14. Procédé d'exploitation d'une centrale de cogénération (BHKW) (01) selon la revendication 12, **caractérisé en ce qu'**après nettoyage de la coque (24), le fluide de nettoyage (43) purifié en traversant un milieu filtrant (48) est reconduit vers le réservoir (46).

15. Procédé d'exploitation d'une centrale de cogénération (BHKW) (01) selon la revendication 12, **caractérisé en ce que** le fluide de nettoyage (43) déjà utilisé lors d'un premier processus de nettoyage est réutilisé lors d'au moins un, ou de plusieurs autres processus de nettoyage.
